# EUROPEAN PATENT APPLICATION

(11) **EP 1 379 009 A2**
(43) Date of publication of application: **07.01.2004**
(21) Application number: 03254170.8
(22) Date of filing: 30.06.2003
(51) Int. Cl.: H04B 1/707, H04L 25/03

(54) **A CDMA receiving device and method**

(30) Priority: 01.07.2002 JP 2002192090
(71) Applicant: FUJITSU LIMITED, Kawasaki-shi, Kanagawa 211-8588 (JP)
(72) Inventor: Iwamatsu, Takanori, Fujitsu Limited, Kawasaki-shi, Kanagawa 211-8588 (JP); Katayama, Yoshihisa, Fujitsu Limited, Kawasaki-shi, Kanagawa 211-8588 (JP)
(74) Representative: Williams, Michael Ian

(57) **Abstract**

A CDMA receiving device is provided. The receiving device comprises a receiving unit (29) for receiving a spread signal; a despreading unit (34) for despreading the received signal; an equalizing unit (30) for equalizing the despread signal; and a spreading unit (32,35) for spreading amplitude information and error information of the despread signal; wherein the spread amplitude information and error information are used as controlling signals in the equalizing unit.

## Description

### CROSS-REFERENCE TO RELATED APPLICATION

The present application is based on Japanese priority application No. 2002-192090 filed on July 1, 2002 with the Japanese Patent Office, the entire contents of that are hereby incorporated by reference.

### BACKGROUND OF THE INVENTION

### 1. Field of the Invention

The present invention generally relates to a CDMA receiving device and a CDMA receiving method, and especially relates to the devices and the methods in which CDMA received signals are equalized or interference compensated.

### 2. Description of the Related Art

As a next generation mobile communication system for realizing wireless multimedia communication, a digital cellular wireless communication system employing DS-CDMA (Direct Sequence Code Division Multiple Access) is now being developed. In the CDMA communication system, a plurality of channels or user transmitted information are multiplexed using spreading codes and transmitted through wireless communication path.

A mobile communication system is easily affected by fading phenomenon resulted from random changes in amplitude and phase having the maximum frequency determined by the speed of a mobile terminal and carrier frequency. Therefore, it is much more difficult to stably receive signals in the mobile communication system, compared with a fixed radio communication system.

Spread spectrum communications are effective for alleviating degradation resulted from such frequency selective fading. In the spread spectrum communications, narrowband signals are spread to wideband prior to transmission, therefore even if there is an electric field strength loss at a specific narrow frequency region, the transmitted information can be well recovered from other frequency regions. In other words, in the presence of narrowband interference, there is a significant advantage to employing spreading procedure. Since the interference is introduced after the transmitted signal is spread, then, whereas the despreading operation at the receiver shrinks the desired signal back to its original bandwidth, at the same time it spreads the undesired signal interference in bandwidth by the same amount, thus reducing its power spectral density.

And in the mobile communication system, a signal can be reflected by tall buildings or mountains located far away to generate delayed waves, causing multipath fading.

In the direct sequence spreading system, the delayed waves become interference waves against spreading codes, resulting in degradation in reception characteristics. One RAKE reception scheme of utilizing the delayed waves for improving the reception characteristics is proposed by Japanese Patent Laid-open 2001-40981, in which each delayed wave propagated through each path is despread, and each delayed time is matched. And then each wave is weighted depending on its reception level and added together. In order to solve the fading problem, two techniques, spectrum spreading and RAKE reception, are mainly employed.

As the mobile communication traffic increases, more transmission capacity is needed. And multilevel transmission is desired to be more developed. For example, 4PSK is employed at present, but in the future 16QAM and higher multilevel modulation will be utilized. For higher multilevel modulations, the accuracy will be much more required in radio devices.

On the other hand, in a conventional multilevel modulation system such as CATV or fixed micro system, an equalizer is widely used. A typical equalizer is a transversal equalizer, in which tap coefficients for FIR filters are automatically calculated to adaptively equalize delayed waves.

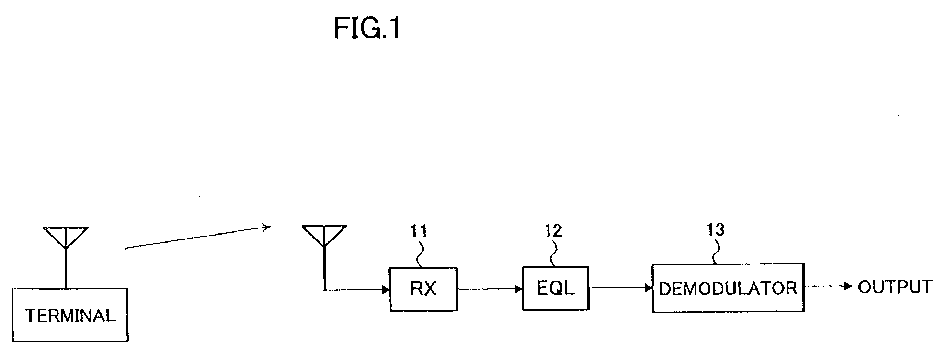

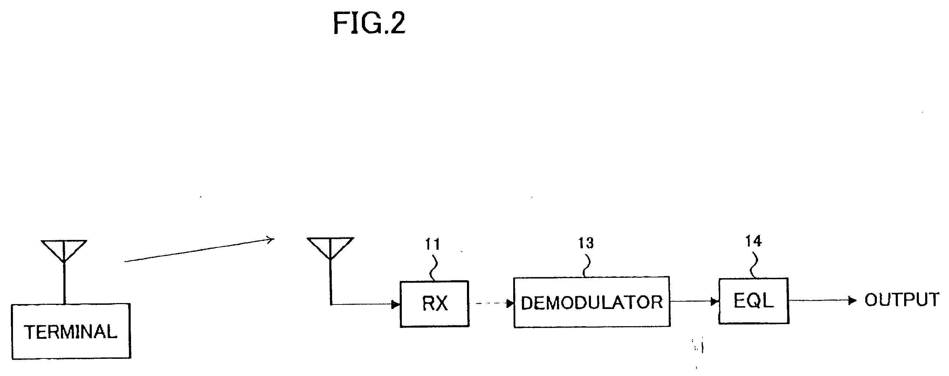

This scheme has not yet been realized in mobile communication systems, but was proposed by Japanese Patent Laid-open 7-30519. For example, FIG. 1 shows a block diagram of a conventional CDMA receiving device. This assumes that only one radio wave from a terminal is received, for simplicity. An equalizer (EQL) 12 is placed between a receiving part (RX) 11 and a demodulator (13) having despreading function at receiving side. This structure can eliminate distortion component of a transmission line. An equalizer 14 can be placed after the demodulator 13 as shown in FIG. 2.

FIG. 3 is a block diagram showing one example of a structure of the demodulator 13. The demodulator 13 comprises a timing adjusting part 15 and a despreading part 16.

FIG. 4 is a block diagram showing one example of a structure of the transversal equalizer.

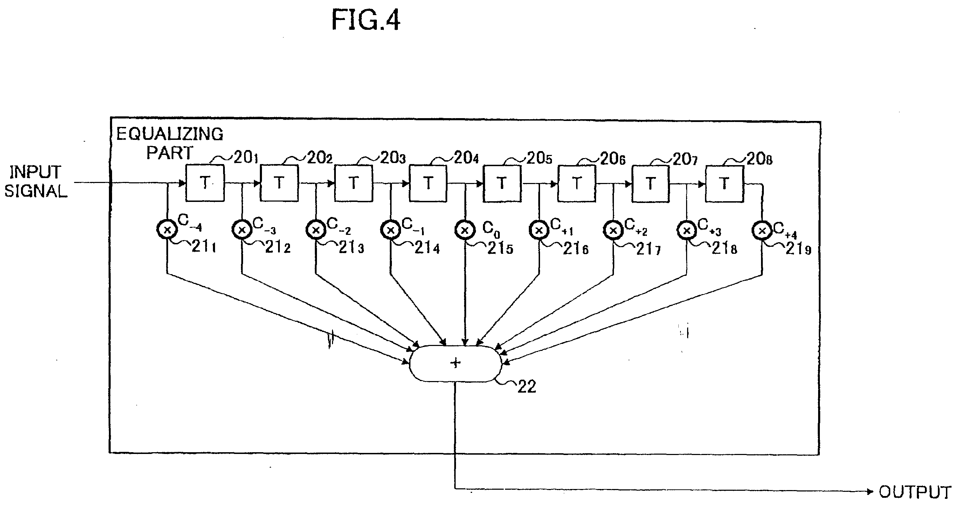

In the figure, the equalizer comprises cascaded unit time delay elements 20₁ ~ 20₈ receiving input signals, multiplier 21₁ ~ 21₉ for multiplying tap coefficients C₋₄ ~ C₊₄ to input/output signals of the unit time delay elements, and an adder 22 for summing the multiplier outputs. The transversal equalizer can automatically calculate coefficients for FIR filters or IIR filters, and eliminate distortion and interference in transmission lines. FIG. 4 shows an example of 9 taps, but the tap length may be determined by system requirement.

In general, the tap coefficients C₋₄ ~ C₊₄ are calculated by correlating amplitude information and error information of the signal while keeping their timings matched with each tap.

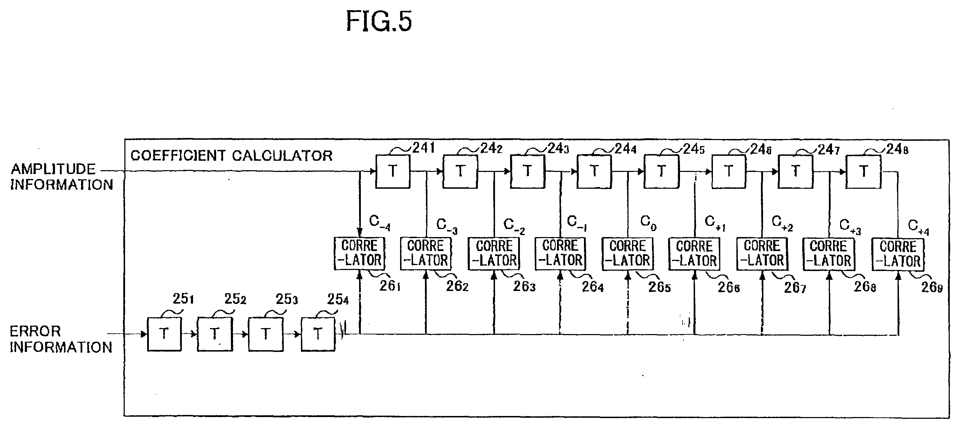

FIG. 5 shows an example of a tap coefficient calculating part of a transversal equalizer. In the figure, the tap coefficient calculating part comprises cascaded unit time delay elements 24₁~ 24₈ receiving amplitude information, cascaded unit time delay elements 25₁ ~ 25₄ receiving error information, and correlating elements 26₁ ~ 26₉. The correlating elements perform correlating operation between amplitude information inputted/outputted from each unit time delay element 24₁~ 24₈ and error information outputted from the unit time delay element 25₄. Each of the equalizers 12 and 14 comprises the equalizing part shown in FIG. 4 and the tap coefficient calculating part shown in FIG. 5.

In these figures, one-dimensional equalizer is shown for simplicity. Two-dimensional equalizer is generally used for 4PSK or higher multilevel communications, or I and Q channels of an orthogonal amplitude modulation system.

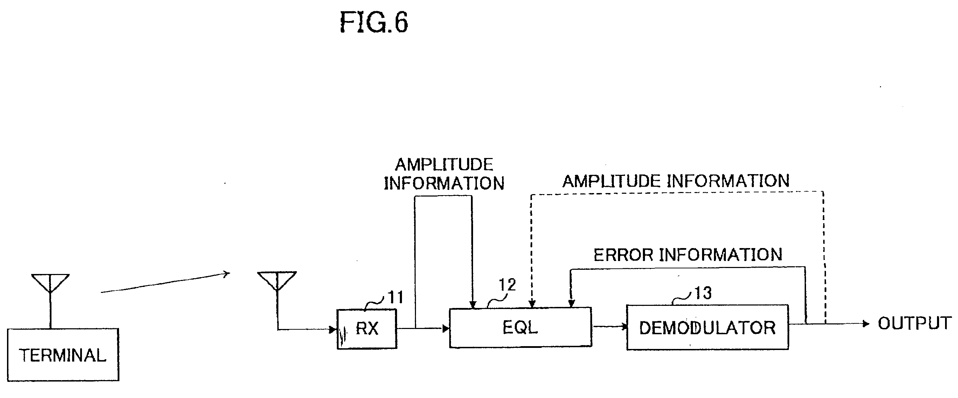

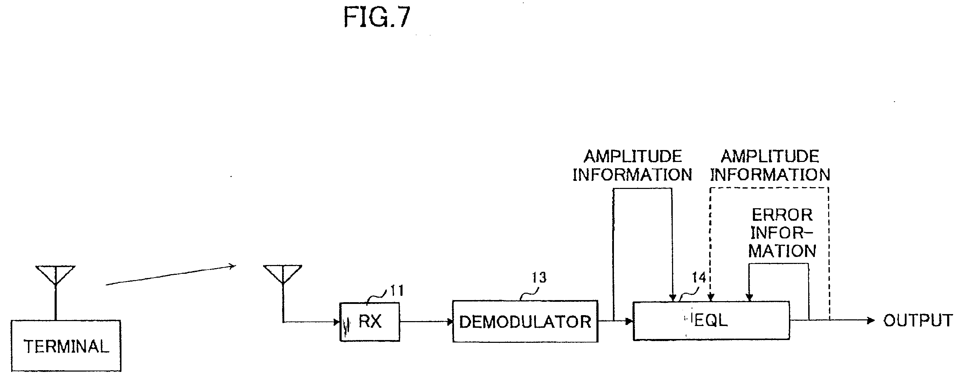

FIG. 6 shows the CDMA receiving device of FIG. 1 with controlling mechanism indicated. FIG. 7 shows the CDMA receiving device of FIG. 2 with controlling mechanism indicated. In FIGs. 6 and 7, two types of amplitude information feedbacks are shown, because there are plural ways of controlling.

As a first problem, in FIG. 6 for example, if the amplitude information is derived from the pre-stage, then the amplitude information is based on the spread signal and the error information is based on a despread signal. The equalizer 12 equalizes the spread signal. Accordingly, the equalized signal and the amplitude information, and the error information have different types or modes with respect to despreading, and therefore it is impossible to perform accurate correlating calculation in the coefficient calculating part shown in FIG. 5.

As a second problem, in FIG. 6, even when the amplitude information is derived from the output of the demodulator 13, a signal equalized by the equalizer 12 is a spread signal, and the amplitude information and error information are based on a despread signal. Accordingly, the equalized signal and the amplitude information, and the error information have different types or modes with respect to despreading, and therefore it is impossible to perform accurate equalization on the input signal.

As a third problem, when a despread signal outputted from a demodulator 13 is equalized by an equalizer 14 as shown in FIG. 7, amplitude information and error information are based on a despread signal. A signal to be equalized by the equalizer 14 is a spread signal. Accordingly, the amplitude information and error information as controlling signals for the equalizer 14 should be based on a spread signal to perform accurate equalization.

In the above explanation, an equalizer is employed, but the present invention can be applied to an interference compensation device such as an interference canceller. One example of such interference compensation device is shown in "Experiments on Parallel-type Coherent Multi-Stage Interference Canceller with Channel Estimation Using Pilot and Decision-feedback Data Symbols in W-CDMA Reverse Link", Technical Report of The Institute of Electronics, Information and Communication Engineers, RCS2000-130, p13-19. Another example is shown in IEEE, Globecom' 93.11.29~12.2, p1677~1682, "Decision Feedback Multistage Receivers for Asynchronous CDMA Systems". In a case where an interference compensation device such as a decision feedback interference canceller is provided before or after despreading, a controlling signal for controlling the interference compensation device has the same problem as in equalizers, and signal processing controlled by a feedback signal also has the same problem.

### SUMMARY OF THE INVENTION

It is a general object of the present invention to provide a CDMA receiving device and method in which accurate equalization or interference compensation can be performed by adjusting controlling signals for controlling the equalization or interference compensation so that the controlling signals have the same types or modes.

Features and advantages of the present invention will be set forth in the description that follows, and in part will become apparent from the description and the accompanying drawings, or may be learned by practice of the invention according to the teachings provided in the description. Objects as well as other features and advantages of the present invention will be realized and attained by an apparatus and a method particularly pointed out in the specification in such full, clear, concise, and exact terms as to enable a person having ordinary skill in the art to practice the invention.

To achieve these and other advantages and in accordance with the purpose of the present invention, as embodied and broadly described herein, the invention provides as follows.

The present invention provides a CDMA receiving device comprising: a receiving unit for receiving a spread signal; an equalizing unit for equalizing the received signal; a despreading unit for despreading the received signal; and a controlling signal adjusting unit for adjusting a despread signal obtained from the despreading unit and outputting the adjusted signal as a controlling signal for the equalizing unit.

The present invention provides a CDMA receiving device comprising: a receiving unit for receiving a spread signal; an interference compensation unit for performing interference compensation on the received signal; a despreading unit for despreading the received signal; and a controlling signal adjusting unit for adjusting a despread signal obtained from the despreading unit and outputting the adjusted signal as a controlling signal for the interference compensation unit.

The present invention provides a CDMA receiving device comprising: a receiving unit for receiving a spread signal; a despreading unit for despreading the received signal; an equalizing unit for equalizing the despread signal; and a spreading unit for spreading amplitude information and error information outputted from the equalizing unit; wherein the spread amplitude information and error information are used as controlling signals in the equalizing unit.

The present invention provides a CDMA receiving device comprising: a receiving unit for receiving a spread signal; a despreading unit for despreading the received signal; an interference compensation unit for performing interference compensation on the despread signal; and a spreading unit for spreading amplitude information and error information outputted from the interference compensation unit; wherein the spread amplitude information and error information are used as controlling signals in the interference compensation unit.

The present invention provides a CDMA receiving device comprising: a receiving unit for receiving a spread signal; an equalizing unit for equalizing the received signal; a despreading unit for despreading the equalized signal; and a spreading unit for spreading amplitude information and error information outputted from the despreading unit; wherein the spread amplitude information and error information are used as controlling signals in the equalizing unit.

The present invention provides a CDMA receiving device comprising: a receiving unit for receiving a spread signal; an interference compensation unit for performing interference compensation on the received signal; a despreading unit for despreading the compensated signal; and a spreading unit for spreading amplitude information and error information outputted from the despreading unit; wherein the spread amplitude information and error information are used as controlling signals in the interference compensation unit.

The present invention provides a CDMA receiving device comprising: a receiving unit for receiving a spread signal; an equalizing unit for equalizing the received signal; a despreading unit for despreading the equalized signal; and a spreading unit for spreading error information outputted from the despreading unit; wherein the spread error information and amplitude information inputted to the equalizing unit are used as controlling signals in the equalizing unit.

The present invention provides a CDMA receiving device comprising: a receiving unit for receiving a spread signal; an interference compensation unit for performing interference compensation on the received signal; a despreading unit for despreading the compensated signal; and a spreading unit for spreading error information outputted from the despreading unit; wherein the spread error information and amplitude information inputted to the interference compensation unit are used as controlling signals in the interference compensation unit.

The present invention provides a CDMA receiving device comprising: a receiving unit for receiving a spread signal; a signal processing unit for performing signal processing on the received signal; a despreading unit for despreading the received signal; and a controlling signal adjusting unit for adjusting a despread signal obtained from the despreading unit and outputting the adjusted signal as a controlling signal for the signal processing unit.

The present invention provides a CDMA receiving method comprising the steps of: receiving a spread signal; performing signal processing and despreading on the received signal; and adjusting a despread signal obtained from the despreading step and outputting the adjusted signal as a controlling signal for the signal processing.

The present invention provides a CDMA receiving device comprising: a receiving unit for receiving a spread signal; a despreading unit for despreading the received signal; an equalizing unit for equalizing the despread signal; and a spreading unit for spreading amplitude information inputted to the equalizing unit and error information outputted from the equalizing unit; wherein the spread amplitude information and error information are used as controlling signals in the equalizing unit.

The present invention provides a CDMA receiving device comprising: a receiving unit for receiving a spread signal; a signal processing unit for performing signal processing on the received signal; a despreading unit for despreading the received signal; and a controlling signal adjusting unit for adjusting a signal fed back from the CDMA receiving device and outputting the adjusted signal as a controlling signal for the signal processing unit.

### BRIEF DESCRIPTION OF THE DRAWINGS

FIG.1 is a block diagram of a conventional CDMA receiving device;
FIG.2 is a block diagram of another conventional CDMA receiving device;

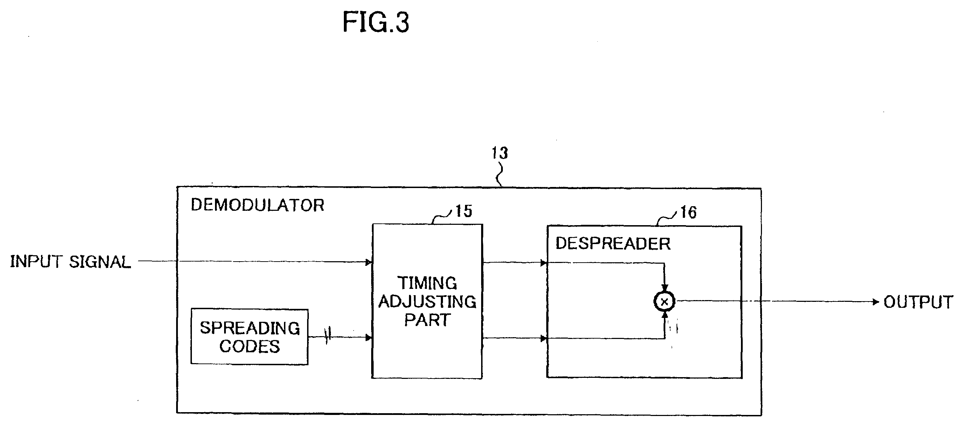

FIG.3 is a block diagram of a demodulating part of a CDMA receiving device;
FIG.4 is a block diagram of an equalizing part of a transversal equalizer;
FIG.5 is a block diagram of a tap coefficient calculating part of a transversal equalizer;
FIG.6 is a block diagram of a conventional CDMA receiving device similar to FIG. 1, illustrating controlling mechanism;
FIG.7 is a block diagram of a conventional CDMA receiving device similar to FIG. 2, illustrating controlling mechanism;

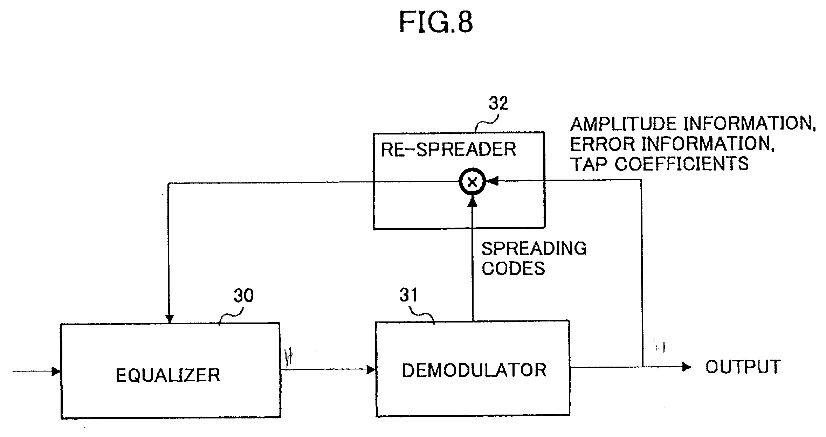

FIG.8 is a block diagram illustrating a first principle of the present invention;

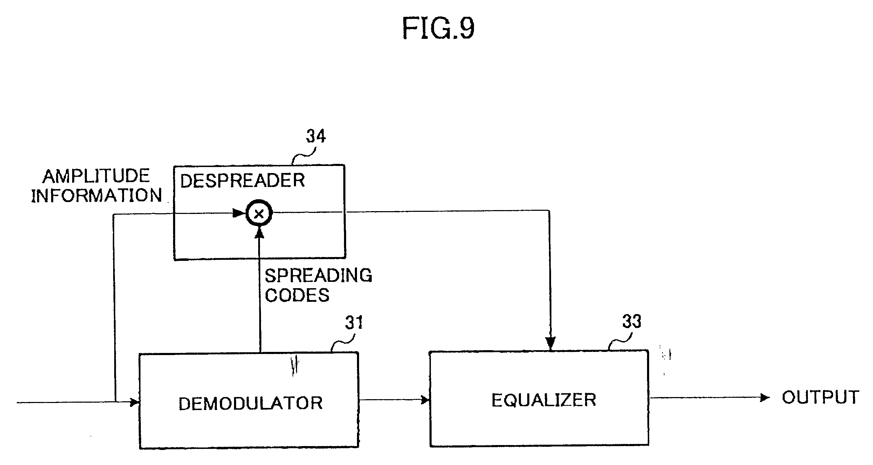

FIG.9 is a block diagram illustrating a second principle of the present invention;

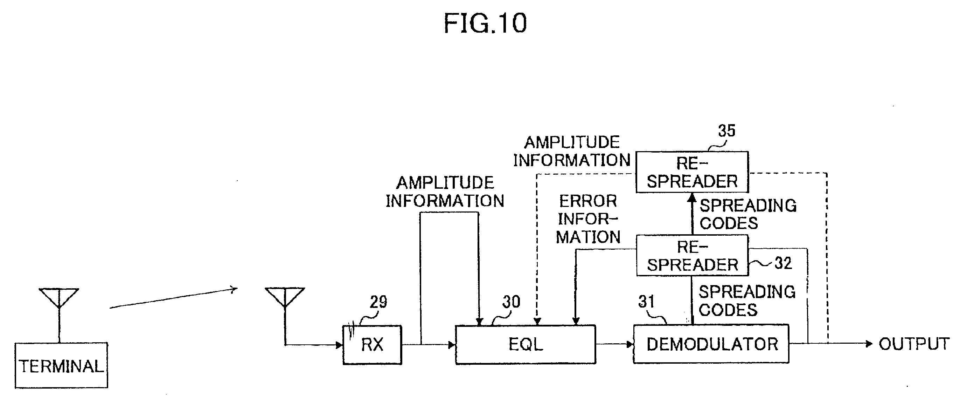

FIG.10 is a block diagram of a first embodiment CDMA receiving device according to the first principle of the present invention;

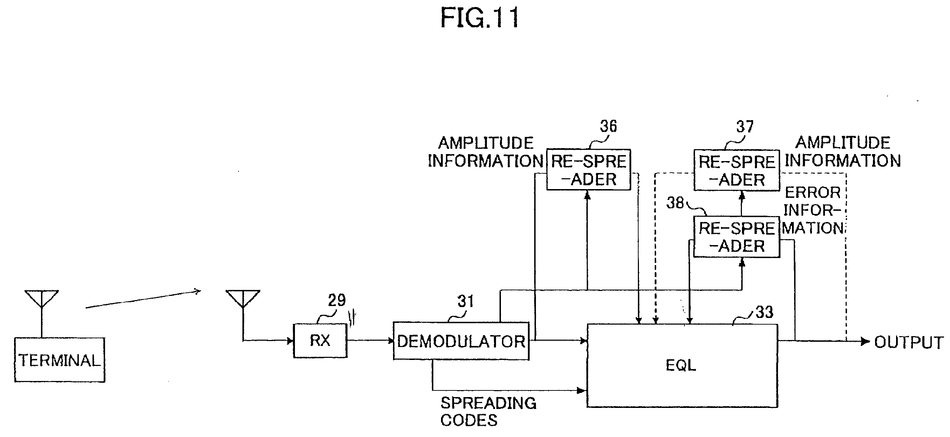

FIG.11 is a block diagram of a second embodiment CDMA receiving device according to the first and second principles of the present invention;

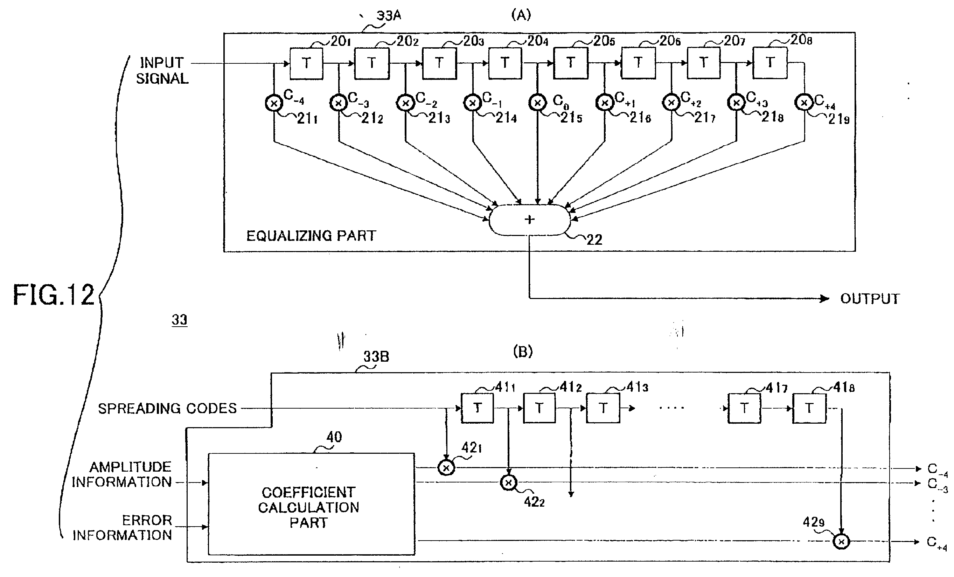

FIG.12 is a block diagram of an equalizer according to the above embodiments of the present invention;

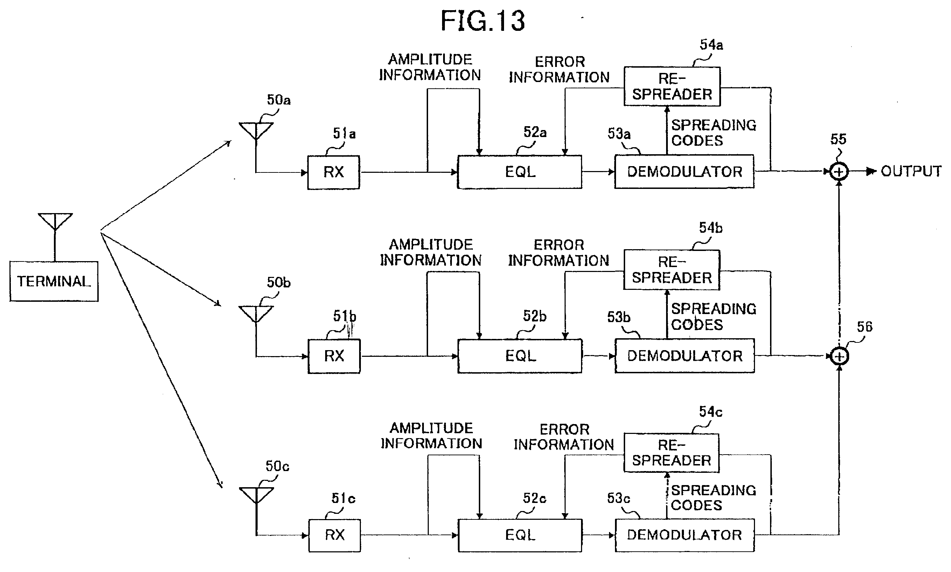

FIG.13 is a block diagram of a third embodiment CDMA receiving device performing RAKE receiving;

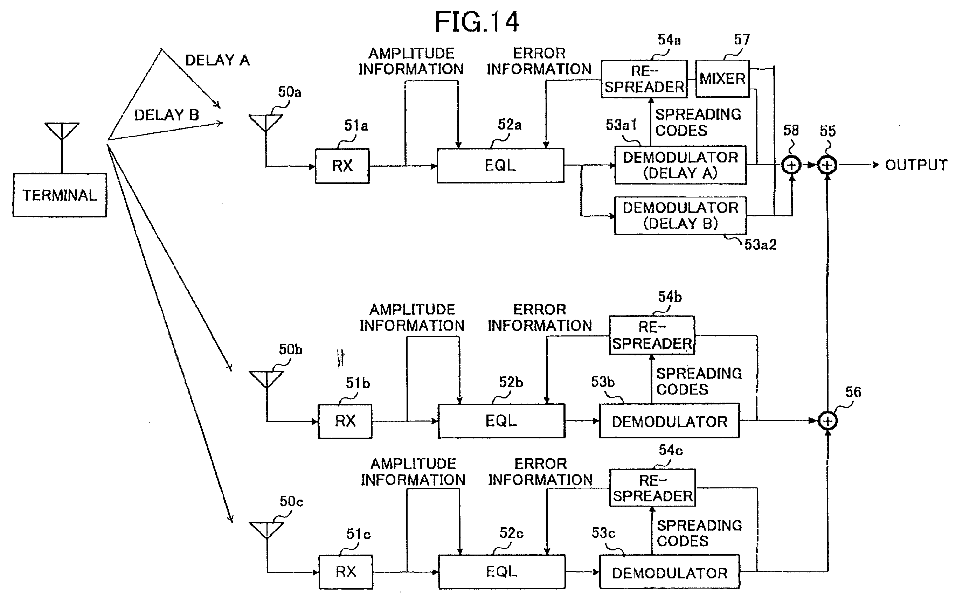

FIG.14 is a block diagram of a fourth embodiment CDMA receiving device performing RAKE receiving; and

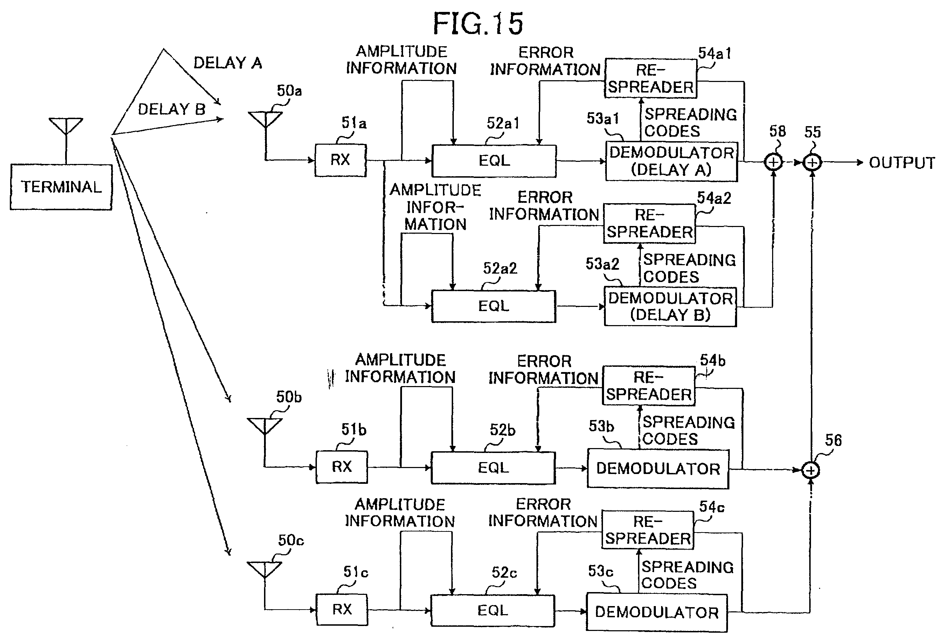

FIG.15 is a block diagram of a fifth embodiment CDMA receiving device performing RAKE receiving;

### DESCRIPTION OF THE PREFERRED EMBODIMENTS

In the following, embodiments of the present invention will be described with reference to the accompanying drawings.

First, the principle of the present invention is explained. In an equalizer according to the present invention, the type or mode of a signal to be equalized and the types or modes of controlling signals such as amplitude information, error information and tap coefficients for controlling equalization are matched with each other in order to provide desired equalization.

FIG. 8 is a block diagram illustrating a firs principle of the present invention. In this block diagram, a decoder or demodulator 31 is provided after an equalizer 30. In this case, when obtaining amplitude information, error information and tap coefficients from the decoded type or decoded mode, these parameters are supplied to a re-spreader 32, where these parameters are re-spread using spreading codes supplied from the demodulator 31 and then outputted to the equalizer 30. The re-spreading process should be performed in exactly matched timing, and therefore the types or modes of the amplitude information, error information and tap coefficients can be matched with the type or mode of the inputted signal to the equalizer 30.

In all the embodiments explained in this Description, equalizers can be replaced with other signal processing devices such as an interference compensation device.

FIG. 9 is a block diagram illustrating a second principle of the present invention. In this block diagram, an equalizer 33 is provided after the decoder or demodulator 31. In this case, when obtaining amplitude information from the pre-decoding type or pre-decoding mode, the amplitude information is supplied to a despreader 34, where the amplitude information despread using spreading codes supplied from the demodulator 31 and outputted to the equalizer 33. The despreading process should be performed in exactly matched timing, and therefore the type or mode of the amplitude information can be matched with the types or modes of error information and the inputted signal to the equalizer 33.

FIG. 10 is a first embodiment block diagram of a CDMA receiving device in accordance with the first principle of the present invention. In this figure, the same parts as those shown in FIG. 8 are assigned the same reference numerals. In FIG. 10, a DS-CDMA communication signal received at a receiver 29 is fed through an equalizer 30 to a decoder or demodulator 31, where the signal is timing-adjusted, despread and demodulated.

Amplitude information of the received signal is supplied to the equalizer 30. Error information of the demodulated signal (difference between the desired value and the actual demodulated signal value) is supplied to a re-spreader 32, where the error information is re-spread using spreading codes supplied from the demodulator 31 and then outputted to the equalizer 30. Based on the amplitude information and the error information having the same type or mode, the equalizer 30 calculates tap coefficients, equalizes the received signal using the calculated tap coefficients, and outputted the equalized signal to the demodulator 31.

If amplitude information obtained from the demodulated signal is utilized, the amplitude information after demodulation is supplied to a re-spreader 35 as indicated by a broken line, where the amplitude information is re-spread using the spreading codes supplied from the demodulator 31 and then outputted to the equalizer 30. Based on the amplitude information and the error information having the same type or mode supplied from the re-spreaders 35 and 32, the equalizer 30 calculates tap coefficients, equalizes the received signal using the calculated tap coefficients, and outputted the equalized signal to the demodulator 31.

FIG. 11 is a second embodiment block diagram of a CDMA receiving device in accordance with the first and second principles of the present invention. In this figure, the same parts as those shown in FIGs. 9 and 10 are assigned the same reference numerals. In FIG. 11, a DS-CDMA communication signal received at a receiver 29 is fed to a decoder or demodulator 31, where the received signal is timing-adjusted, despread and demodulated. The demodulated signal is equalized by an equalizer 33 and outputted.

Amplitude information from the demodulator 31 is supplied to a re-spreader 36, where the amplitude information is re-spread using spreading codes supplied from the demodulator 31 and outputted to the equalizer 33. Error information outputted from the equalizer 33 is supplied to a re-spreader 38, where the error information is re-spread using the spreading codes supplied from the demodulator 31 and fed back to the equalizer 33. Based on these re-spread amplitude information and error information having the same type or mode, the equalizer 33 calculates tap coefficients, and equalizes the received signal using the calculated tap coefficients.

if amplitude information obtained from the output of the equalizer 33 is utilized, the amplitude information after equalization is supplied to a re-spreader 37 as indicated by a broken line, where the amplitude information is re-spread using the spreading codes supplied from the demodulator 31 and then fed back to the equalizer 33. Based on the amplitude information and the error information having the same type or mode supplied from the re-spreaders 37 and 38, the equalizer 33 calculates tap coefficients, equalizes the received signal using the calculated tap coefficients, and outputted the equalized signal.

As explained above, if the error information and amplitude information obtained from the despread signal are used as they are for calculating the tap coefficients, errors are generated when shifting timing during the tap coefficients calculation. In order to avoid this problem, re-spreading of these parameters are performed to avoid the influence of the despreading. The tap coefficients calculated in this manner can be utilized in pre-despreading type or mode. And if thus obtained tap coefficients are utilized in an equalizer in the post-despreading stage, the tap coefficients are despread.

FIG. 12 is a block diagram of an equalizer 33 according to the above scheme of despreading the tap coefficients. The equalizer 33 comprises an equalizing part 33A shown in FIG. 12(A) and a tap coefficient calculating part 33B shown in FIG. 12(B). The equalizing part 33A has the same structure as the equalizing part shown in FIG. 4, and therefore its explanation is omitted. The tap coefficient calculation part 33B has the same structure as the tap coefficient calculation part shown in FIG. 5, and therefore its explanation is omitted.

In FIG. 12(A), spreading codes supplied from the demodulator 31 are sequentially delayed by cascaded unit time delay elements 41₁ ~ 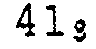 . Each of inputted and outputted signals of the unit time delay elements are supplied to each of multiplier 42₁ ~ 42₉ respectively. Each of tap coefficients outputted from the coefficient calculation part 40 are supplied to each of the multiplier 42₁ ~ 42₉ respectively, and are despread using each of the spreading codes respectively to obtain the despread tap coefficients C₋₄ ~ C₊₄, which are supplied to each of the multipliers 21₁ ~ 21₉.

In the example shown in FIG. 12, the despreading process is performed on the tap coefficients to be operated later on the input signal. However, after the tap coefficients are operated on the input signal, the despreading process can be performed to obtain a similar result. That is, the order of these two operations can be changed.

In the above examples, only one radio wave from a transmitter is explained for simplicity. However, in the actual mobile communication system, it is more general that a signal can travel from a transmitter to a receiver over multiple reflective paths; this phenomenon is referred to as multipath propagation. The effect can cause fluctuations in the received signal's amplitude, phase and angle of arrival, that is multipath fading. And most receivers have a plurality of antennas. In this condition, a plurality of demodulators can be provided to demodulate each of the plurality of propagated radio waves and mix the demodulated signals, that is RAKE receiving.

FIG. 13 is a third embodiment block diagram of a CDMA receiving device performing RAKE receiving. In this figure, a plurality of propagated radio waves acquired by antennas 50a ~ 50_{c} are received by receiving parts 51ₐ ~ 51_{c}, respectively. The DS-CDMA signals received at the receiving parts 51ₐ ~ 51_{c} are supplied through equalizers 52ₐ ~ 52_{c} to demodulators 53ₐ ~ 53_{c}, where the signals are timing-adjusted, despread and demodulated, and delayed by desired time respectively.

Amplitude information of each of the received signals is supplied to one of the equalizer 52ₐ ~ 52_{c}, respectively. Error information of each of the demodulated signals (difference between the desired value and the actual demodulated signal value) is suppled to one of re-spreaders 54ₐ ~ 54_{c}, where the error information is respread using spreading codes supplied from the demodulators 53ₐ ~ 53_{c}.

Based on the respective amplitude information and the error information having the same type or mode, each of the equalizers 52ₐ ~ 52_{c} calculates tap coefficients, and equalizes the received signal using the calculated tap coefficients, and outputted the equalized signal to each of the demodulators 53ₐ~ 53_{c}, respectively. Demodulated signals outputted by each of demodulators 53a ~ 53c, with given an adequate delay respectively, are mixed at summing parts 55 and 56, and then the mixed signal are outputted.

FIG. 14 is a fourth embodiment block diagram of a CDMA receiving device performing RAKE receiving. In this figure, the same parts as those shown in FIG. 13 are assigned the same reference numerals. In FIG. 14, a plurality of propagated radio waves acquired by antennas 50ₐ ∼50_{c} are received by receiving parts 51ₐ ~ 51_{c}, respectively. Two radio waves (paths) having different time delays are acquired by the antenna 50a.

The DS-CDMA signals received at the receiving parts 51ₐ ~ 51_{c} are supplied through equalizers 52ₐ ~ 52_{c} to demodulators 53ₐ₁, 53a₂, 53_{b}, 53_{c}. The two different path signals equalized by the equalizers 52ₐ are separately supplied to the demodulators 53ₐ₁ and 53ₐ₂. Each of the demodulators 53ₐ₁ and 53ₐ₂ adjusts the timing of each of the equalized signals, despreads and demodulates the timing-adjusted signal to output them with adequate delays respectively.

Amplitude information of each of the received signals is supplied to each of the equalizers 52ₐ ~ 52_{c}. Error information obtained from the demodulators 53ₐ₁ and 53ₐ₂ are mixed at a mixer 57. The mixing way at the mixer 57 is simple addition or selection of an errorless signal, and so on. The mixed error information is supplied to the re-spreader 54ₐ. Error information obtained from the demodulators 53_{b} and 53_{c} are supplied to the re-demodulators 54_{b} and 54_{c}. The re-spreaders 54a ~ 54c utilize spreading codes supplied from the demodulators 53ₐ₁, 53_{b}, 53_{c}, to re-spread each of the error information respectively, and supplied each of the re-spread error information to each of the equalizers 52ₐ ~ 52_{c}. Based on the amplitude information and error information having the same type or mode, each of the equalizers 52ₐ ~ 52_{c} calculates tap coefficients, equalizes the received signal using the calculated coefficients, and supplied the equalized signal to each of the demodulators 53ₐ₁, 53ₐ₂, 53_{b}, 53_{c}.

The demodulated signals outputted from the demodulators 53ₐ₁, 53ₐ₂, with given adequate delays, are added together at an adder 5B, and supplied to an adder 55. The demodulated signals outputted from the demodulator 53_{b} and 53_{c} are given adequate delays respectively and added together at an adder 56, and supplied to the adder 55, where they are added to the demodulated and added signal from the adder 58 and outputted. In this embodiment, the distortions simultaneously affected to the two paths can be equalized.

FIG. 15 is a fifth embodiment block diagram of a CDMA receiving device performing RAKE receiving. In this figure, the same parts as those shown in FIG. 14 are assigned the same reference numerals. In FIG. 15, a plurality of propagated radio waves acquired by antennas 50ₐ ~ 50_{c} are received by receiving parts 51ₐ ~ 51_{c}, respectively. Two radio waves (paths) having different time delays are acquired by the antenna 50a.

Two path received signals of the DS-CDMA signals received at the receiving parts 51ₐ are supplied through equalizers 52_{a1,} 52ₐ₂ to demodulators 53ₐ₁, 53a₂. The signals of the DS-CDMA received at the receiving parts 52_{b} 52_{c} are supplied through equalizers 52_{b}, 52_{c} to demodulators 53_{b}, 53_{c}. Each of the demodulators 53ₐ₁, 53ₐ₂, 53_{b}, 53_{c} adjusts the timings of the received signals, despreads them to demodulate, and further gives an adequate delay time to each of the demodulated signals respectively and output.

Amplitude information of each of the received signals is supplied to each of the equalizers 52ₐ ~ 52_{c}. Error information of each of the demodulated signals from the demodulators 53a1, 53ₐ₂ is supplied to re-spreaders 54ₐ₁, 54ₐ₂, respectively. Error information of the demodulated signals from the demodulators 53_{b}, 53_{c} is supplied to re-spreaders 54_{b}, 54_{c}. Each of the re-spreaders 54ₐ₁, 54ₐ₂, 54_{b}, 54_{c} re-spreads each of the error information respectively, using spreading codes supplied from the demodulators 53ₐ₁, 53ₐ₂, 53_{b}, 53_{c}, and supplied each of the re-spread error information to each of the equalizers 52ₐ₁, 52ₐ₂, 52_{b}, 52_{c}, respectively.

Based on the amplitude information and error information having the same type or mode, each of the equalizers 52ₐ₁, 52ₐ₂, 52_{b}, 52_{c} calculates tap coefficients, equalizes the received signal using the calculated tap coefficients, and supplies each of the equalized signals to each of the demodulators 53ₐ₁, 53ₐ₂, 53_{b}, 53_{c}, respectively.

The demodulated signals outputted from the demodulators 53ₐ₁, 53ₐ₂, with given adequate delays, are added together at an adder 58, and supplied to an adder 55. The demodulated signals outputted from the demodulator 53_{b} and 53_{c} are given adequate delays respectively and added together at an adder 56, and supplied to the adder 55, where they are added to the demodulated and added signal from the adder 58 and outputted. In this embodiment, the equalization process is performed for each antenna and for each path, and therefore distortions simultaneously affected to the two paths can be equalized, and distortions affected on propagation paths also can be equalized.

In the embodiments shown in FIGs. 13, 14 and 15, the demodulation process is performed after the equalization. However, the equalization process can be performed after the demodulation as shown in FIG. 11, and the present invention is not limited to the above embodiments.

In the above embodiments, the explanations are given with respect to the equalization process, but the present invention can also be applied to interference compensation to solve the problem of condition or stage of controlling signals in a similar manner.

The above explained re-spreaders 32, 35 ~ 38 are included in a controlling signal adjusting unit and a spreading unit described in claims. "Signal processing" referred to in this Description and Claims includes any signal processing that is controlled by a controlling signal fed back from its own output terminal, such as equalization process and interference compensation process.

According to the embodiments of the present invention, controlling signals for equalization such as amplitude information and error information are adjusted to adequate type or mode to perform the precise equalization.

According to the embodiments of the present invention, controlling signals for interference compensation such as amplitude information and error information are adjusted to adequate dimension or mode to perform the precise interference compensation.

According to the embodiments of the present invention, controlling signals for signal processing such as amplitude information and error information are adjusted to adequate dimension or mode to perform the precise signal processing.

Further, the present invention is not limited to these embodiments, but various variations and modifications may be made without departing from the scope of the present invention.

## Claims

1. A CDMA receiving device comprising:
a receiving unit for receiving a spread signal;
an equalizing unit for equalizing the received signal;
a despreading unit for despreading the received signal; and
a controlling signal adjusting unit for adjusting a signal obtained from the despread signal to a spread type controlling signal to be supplied to the equalizing unit.

2. A CDMA receiving device ccmprising:
a receiving unit for receiving a spread signal;
an interference compensation unit for performing interference compensation on the received signal;
a despreading unit for despreading the received signal; and
a controlling signal adjusting unit for adjusting a signal obtained from the despread signal to a spread type controlling signal to be supplied to the interference compensation unit.

3. A CDMA receiving device comprising:
a receiving unit for receiving a spread signal;
a despreading unit for despreading the received signal;
an equalizing unit for equalizing the despread signal; and
a spreading unit for spreading amplitude information and error information of the equalized signal;
wherein the spread amplitude information and error information are used as controlling signals in the equalizing unit.

4. A CDMA receiving device comprising:
a receiving unit for receiving a spread signal;
a despreading unit for despreading the received signal;
an interference compensation unit for performing interference compensation on the despread signal; and
a spreading unit for spreading amplitude information and error information outputted of the compensated signal;
wherein the spread amplitude information and error information are used as controlling signals in the interference compensation unit.

5. A CDMA receiving device comprising:
a receiving unit for receiving a spread signal;
an equalizing unit for equalizing the received signal;
a despreading unit for despreading the equalized signal; and
a spreading unit for spreading amplitude information and error information of the despread signal;
wherein the spread amplitude information and error information are used as controlling signals in the equalizing unit.

6. A CDMA receiving device comprising:
a receiving unit for receiving a spread signal;
an interference compensation unit for performing interference compensation on the received signal;
a despreading unit for despreading the compensated signal; and
a spreading unit for spreading amplitude information and error information of the despread signal;
wherein the spread amplitude information and error information are used as controlling signals in the interference compensation unit.

7. A CDMA receiving device comprising:
a receiving unit for receiving a spread signal;
an equalizing unit for equalizing the received signal;
a despreading unit for despreading the equalized signal; and
a spreading unit for spreading error information of the despread signal;
wherein the spread error information and amplitude information inputted to the equalizing unit are used as controlling signals in the equalizing unit.

8. A CDMA receiving device comprising:
a receiving unit for receiving a spread signal;
an interference compensation unit for performing interference compensation on the received signal;
a despreading unit for despreading the compensated signal; and
a spreading unit for spreading error information of the despread signal;
wherein the spread error information and amplitude information inputted to the interference compensation unit are used as controlling signals in the interference compensation unit.

9. A CDMA receiving device comprising:
a receiving unit for receiving a spread signal;
a signal processing unit for performing signal processing on the received signal;
a despreading unit for despreading the received signal; and
a controlling signal adjusting unit for adjusting a signal obtained from the despread signal to a spread type controlling signal to be supplied to the signal processing unit.

10. A CDMA receiving method comprising the steps of:
receiving a spread signal;
performing signal processing and despreading on the received signal; and
adjusting a signal obtained from a despread signal obtained at the despreading step to a spread type controlling signal to be supplied for the signal processing.

11. A CDMA receiving device comprising:
a receiving unit for receiving a spread signal;
a despreading unit for despreading the received signal;
an equalizing unit for equalizing the despread signal; and
a spreading unit for spreading amplitude information of an input signal to the equalizing unit and error information of an output signal from the equalizing unit;
wherein the spread amplitude information and error information are used as controlling signals in the equalizing unit.

12. A CDMA receiving device comprising:
a receiving unit for receiving a spread signal;
a signal processing unit for performing signal prccessing on the received signal;
a despreading unit for despreading the received signal; and
a controlling signal adjusting unit for adjusting a signal obtained from the despread signal to a spread type controlling signal to be supplied to the signal processing unit.
